# EUROPEAN PATENT APPLICATION

(11) **EP 3 349 190 A1**
(43) Date of publication of application: **18.07.2018**
(21) Application number: 17151360.9
(22) Date of filing: 13.01.2017
(51) Int. Cl.: G07C 9/00, F24F 11/00, G01J 5/00

(54) **PEOPLE COUNTER**

(71) Applicant: Siemens Schweiz AG, 8047 Zürich (CH)
(72) Inventor: Fuhrmann, Henning, 8048 Zürich (CH); Zimmermann, Martin, 8909 Zwillikon (CH)
(74) Representative: Maier, Daniel Oliver

(57) **Abstract**

People counter. The instant disclosure also teaches an automation system, in particular a building automation system, with a sensor arrangement, wherein the automation system, in particular the building automation system, couples to at least two thermal infrared sensors and / or detectors (6, 7) and / or to a processing device, and wherein the automation system, in particular the building automation system, is configured to receive data from the at least two thermal infrared sensors (6, 7) and / or detectors and / or from the processing device, wherein the automation system, in particular the building automation system, is configured to determine and / or to update a total number of people in a structure, in a room, in a building, and / or on a campus based on the data received from the at least two thermal infrared sensors (6, 7) and / or from the processing device.

## Description

### Background

For many applications in building automation, an approximate knowledge of the number of people present in a building, a zone or a room would be useful. Determining the number of people can however only be done either indirectly, e.g. by rising concentrations of CO2 or other gases, rising temperature, or directly by video analysis, space resolved infrared (IR) measurements or the introduction of turnpikes or other physical access control devices. These methods are often costly, impractical or unnecessarily delay required responses of the automation system due to their indirectness.
The present disclosure provided a means to count persons entering and leaving a closed area at low cost, effortlessly for the occupant and with sufficient precision for many applications.

### Detailed description

The disclosure proposes to use at least two thermal infrared sensors (detectors, e.g. thermopiles) mounted horizontally close to each other (or integrated in a device) inside the door case or close to it. The term infrared refers to optical wavelengths exceeding 800 nm, preferably exceeding 1000 nm, still more preferably exceeding 1200 nm. The signals from the two sensors are then compared to each other on the time scale to deduce a movement of an object in the horizontal direction. The sequence of the signals of sensors 1 and 2 will indicate the direction of movement, i.e. if a person enters or leaves the room. An automation system connected to the sensor will update the resulting total number of persons in the room. This will of course often not yield the correct number, as two persons may pass together or the like, but for purposes of comfort automation the achievable accuracy should be OK if simple measures like not permitting negative totals or resetting the total to zero during the night are integrated. Possible uses are control of heating, ventilation, air conditioning, activation of lights when the first person enters, activation of "occupied" indicator for meeting rooms, analysis of use of meeting rooms (persons vs seating).

A suitable sensor is commercially available. A possible exemplary sensor even had a 2x2 array, permitting to analyse movements in all four directions. As a rough indication, a price tag of 1 USD in SMD housing for a sensor was given. With communication etc such a sensor could hence cost below 10 USD as a standalone device. If integrated into a room thermostat which is mounted next to the door, the additional cost would probably not be much higher than the sensor cost itself.

An alternative sensor system comprising two horizontally distributed (infrared) light barriers might also provide a similar solution to the problem of counting people entering/leaving a room. This alternative solution requires two light beams, two detectors, a reflector installed on the opposite door case, and could result in complex sensor arrangement during manufacturing and commissioning.

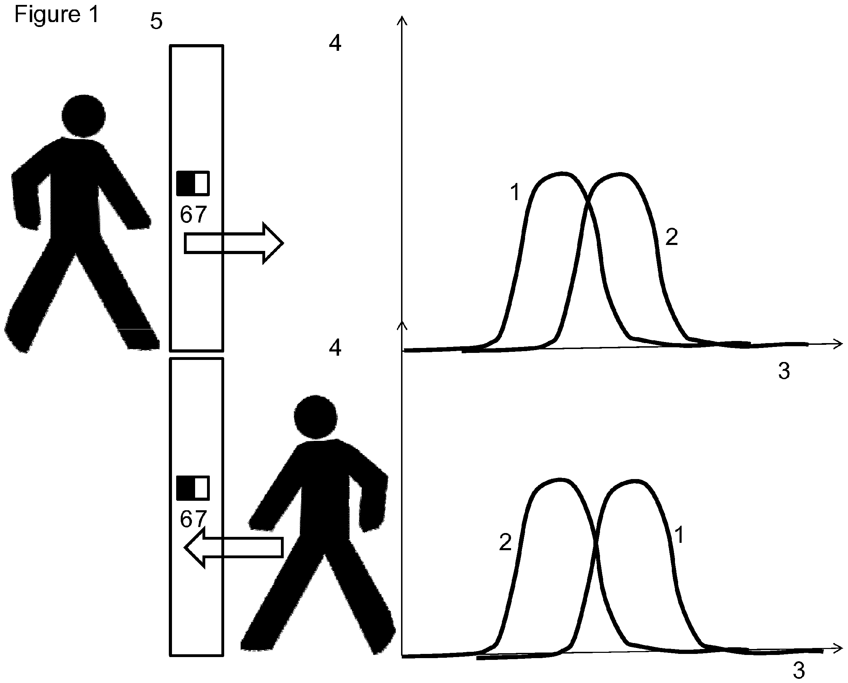

Figure 1 shows an exemplary sensor system or sensor arrangement having at least two thermal infrared sensors 1, 2 (detectors, e.g. thermopiles) mounted horizontally close to each other (or integrated in a device) inside the door case or close to it. The signals of the two sensors 1, 2 are then compared to each other on the time scale to deduce on movement of an object in the horizontal direction. The sequence of the signals of sensors 1 and 2 will indicate the direction of movement, i.e. if a person enters or leaves the room. An automation system connected to the sensor will update the resulting total number of persons in the room. This will of course often not yield the correct number, as two persons may pass together or the like, but for purposes of comfort automation the achievable accuracy should be OK if simple measures like not permitting negative totals or resetting the total to zero during the night and / or after a period without movement detected by a simple motion sensor in the room are integrated. Possible uses are control of heating, ventilation, air conditioning, activation of lights when the first person enters, activation of "occupied" indicator for meeting rooms, analysis of use of meeting rooms (persons vs seating).

In other words, the instant disclosure teaches a sensor arrangement, comprising:
at least two thermal infrared sensors (6, 7) and / or detectors, in particular thermopiles, mounted at a distance from one another at or near an entry / exit-area, in particular in the vicinity of a door case (5),
a processing device, in particular a microcontroller, communicatively coupled to the at least two thermal infrared sensors (6, 7) and / or detectors and configured to receive signals (1, 2) from the at least two thermal infrared sensors (6, 7) and / or detectors, and
configured to process the signals (1, 2) received from the at least two thermal infrared sensors (6, 7) and / or detectors, and
configured to determine movement, in particular horizontal movement, of an object from the processed signals (1, 2) received from the at least two thermal infrared sensors (6, 7) and / or detectors.

The at least two thermal infrared sensors (6, 7) and / or detectors are preferably arranged at a distance of less than 10 mm from one another, more preferred less than 5 mm from one another, still more preferred less than 2 mm from one another.

The at least two thermal infrared sensors (6, 7) and / or detectors preferably are surface-mounted devices.

The at least two thermal infrared sensors (6, 7) and / or detectors preferably are integrated circuits.

The processing device, in particular the microcontroller, is advantageously communicatively coupled to the at least two thermal infrared sensors (6, 7) and / or detectors via a suitable bus and using a suitable protocol. In an embodiment, the suitable bus is an I2C-bus. It is envisaged that the sensor arrangement also comprises the suitable bus.

The instant disclosure also teaches one of the aforementioned sensor arrangements, wherein the at least two thermal infrared sensors (6, 7) and / or detectors are integrated in a single device.

The instant disclosure also teaches one of the aforementioned sensor arrangements, wherein the processing device is configured to compare the processed signals (1, 2) received from the at least two thermal infrared sensors (6, 7) to one another on a time scale to determine movement of an object, in particular horizontal movement of an individual, in a horizontal direction.

The instant disclosure also teaches one of the aforementioned sensor arrangements, wherein the at least two thermal infrared sensors (6, 7) and / or detectors are located at, in, or near an entry / exit-area of a structure, of a room, of a building, and / or of a campus.

The at least two thermal infrared sensors (6, 7) and / or detectors are preferably located at a distance of less than 100 cm, yet more preferably less than 50 cm, still more preferably less than 20 cm, from an entry / exit-area of a structure, of a room, of a building, and / or of a campus.

The instant disclosure also teaches one of the aforementioned sensor arrangements, wherein the processing device is configured to obtain a sequence of signals (1, 2) from the from the at least two thermal infrared sensors (6, 7),
wherein the sequence of signals (1, 2) obtained from the at least two thermal infrared sensors (6, 7) indicates a horizontal direction of movement, in particular indicates if an individual enters or leaves a structure, a room, a building, and / or a campus.

The instant disclosure also teaches one of the aforementioned sensor arrangements, wherein a total number of people in structure, in a room, in a building, and / or on a campus is updated by an automation system, in particular by a building automation system, connected to the at least two thermal infrared sensors (6, 7) and / or detectors and / or to the processing device.

The instant disclosure also teaches an automation system, in particular a building automation system, with one of the aforementioned sensor arrangements, wherein the automation system, in particular the building automation system, communicatively couples to the at least two thermal infrared sensors (6, 7) and / or detectors and / or to the processing device of the sensor arrangement, and
wherein the automation system, in particular the building automation system, is configured to receive data from the at least two thermal infrared sensors (6, 7) and / or detectors and / or from the processing device,
wherein the automation system, in particular the building automation system, is configured to process data received from the at least two thermal infrared sensors (6, 7) and / or from the processing device,
wherein the automation system, in particular the building automation system, is configured to determine and / or to update a total number of people in a structure, in a room, in a building, and / or on a campus based on the processed data received from the at least two thermal infrared sensors (6, 7) and / or from the processing device.

The automation system, in particular the building automation system, advantageously communicatively couples to the at least two thermal infrared sensors (6, 7) and / or detectors and / or to the processing device via a suitable bus and using a suitable protocol. In an embodiment, the suitable bus is an I2C-bus. It is envisaged that the automation system, in particular the building automation system, also comprises the suitable bus.

The instant disclosure still further teaches a structure with an aforementioned automation system, in particular with an aforementioned building automation system.

The instant disclosure still further teaches a thermostat, in particular a smart thermostat, with an aforementioned sensor arrangement.

The instant disclosure still further teaches a thermostat, in particular a smart thermostat, comprising an aforementioned sensor arrangement and an enclosure with at least a window,
wherein the at least a window is transparent to infrared wavelengths, and
wherein the sensor arrangement is mounted inside the enclosure, and
wherein the sensor arrangement is mounted behind the at least a window.

The instant disclosure still further teaches a sensor system comprising at least two horizontally distributed infrared light barriers, having at least two light beams, at least two detectors, and a reflector installed on an opposite entry / exit-area, in particular on a door case (5).

Any steps of a method according to the present disclosure may be embodied in hardware, in a software module executed by a processor, in a cloud computing arrangement, or in a combination thereof. The software may include a firmware, a hardware driver run in the operating system, or an application program. Thus, the disclosure also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the disclosure and that numerous changes may be made therein without departing the scope of the disclosure as defined by the following claims. It should also be understood that the disclosure is not restricted to the illustrated embodiments and that various modifications may be made within the scope of the following claims.

### Reference numerals

- 1: sensor signal from a first sensor
- 2: sensor signal from a second sensor
- 3: time
- 4: sensor output
- 5: door case
- 6: first sensor
- 7: second sensor

## Claims

1. A sensor arrangement, comprising:
at least two thermal infrared sensors (6, 7), in particular thermopiles, mounted at a distance from one another at or near an entry / exit-area, in particular in the vicinity of a door case (5),
a processing device, in particular a microcontroller, communicatively coupled to the at least two thermal infrared sensors (6, 7) and configured to receive signals (1, 2) from the at least two thermal infrared sensors (6, 7), and
configured to process the signals (1, 2) received from the at least two thermal infrared sensors (6, 7), and
configured to determine movement, in particular horizontal movement, of an object from the processed signals (1, 2) received from the at least two thermal infrared sensors (6, 7).

2. The sensor arrangement according to claim 1, wherein the at least two thermal infrared sensors (6, 7) are integrated in a single device.

3. The sensor arrangement according to one of the claims 1 to 2, wherein the processing device is configured to compare the processed signals (1, 2) received from the at least two thermal infrared sensors (6, 7) to one another on a time scale (3), to determine movement of an object, in particular horizontal movement of an individual, in a horizontal direction.

4. The sensor arrangement according to one of the claims 1 to 3, wherein the at least two thermal infrared sensors (6, 7) are located at, in, or near an entry / exit-area of a structure, of a room, of a building, and / or of a campus.

5. The sensor arrangement according to any of the claims 1 to 4, wherein the processing device is configured to obtain a sequence of signals (1, 2) from the from the at least two thermal infrared sensors (6, 7),
wherein the sequence of signals (1, 2) obtained from the at least two thermal infrared sensors (6, 7) indicates a horizontal direction of movement, in particular indicates if an individual enters or leaves a structure, a room, a building, and / or a campus.

6. The sensor arrangement according to any of the claims 1 to 5, wherein a total number of people in a structure, in a room, in a building, and / or on a campus is updated by an automation system, in particular by a building automation system, connected to the at least two thermal infrared sensors (6, 7) and / or to the processing device.

7. An automation system, in particular a building automation system, with a sensor arrangement according to any of the previous claims, wherein the automation system, in particular the building automation system, communicatively couples to the at least two thermal infrared sensors (6, 7) and / or to the processing device of the sensor arrangement, and
wherein the automation system, in particular the building automation system, is configured to receive data from the at least two thermal infrared sensors (6, 7) and / or from the processing device,
wherein the automation system, in particular the building automation system, is configured to process data received from the at least two thermal infrared sensors (6, 7) and / or from the processing device,
wherein the automation system, in particular the building automation system, is configured to determine and / or to update a total number of people in a structure, in a room, in a building, and / or on a campus based on the processed data received from the at least two thermal infrared sensors (6, 7) and / or from the processing device.

8. A structure with an automation system, in particular with a building automation system, according to claim 7.

9. A thermostat, in particular a smart thermostat, with a sensor arrangement according to any of the claims 1 to 6.

10. A thermostat, in particular a smart thermostat, according to claim 9, the thermostat, in particular the smart thermostat, additionally comprising an enclosure with at least a window,
wherein the at least a window is transparent to infrared wavelengths, and
wherein the sensor arrangement is mounted inside the enclosure, and
wherein the sensor arrangement is mounted behind the at least a window.
